(19) Europäisches Patentamt
European Patent Office
Office européen des brevets

(11) **EP 1 692 477 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**12.10.2011 Patentblatt 2011/41**

(45) Hinweis auf die Patenterteilung:
**12.03.2008 Patentblatt 2008/11**

(21) Anmeldenummer: **03785814.9**

(22) Anmeldetag: **13.12.2003**

(51) Int Cl.:
*G01K 13/08* (2006.01)   *F16D 13/72* (2006.01)
*F16D 13/64* (2006.01)

(86) Internationale Anmeldenummer:
**PCT/EP2003/014197**

(87) Internationale Veröffentlichungsnummer:
**WO 2005/057151 (23.06.2005 Gazette 2005/25)**

(54) **VERFAHREN ZUM BESTIMMEN DER LAMELLENTEMPERATUR EINER LAMELLENKUPPLUNG**

METHOD FOR DETERMINING THE DISC TEMPERATURE OF A MULTI-DISC CLUTCH

PROCEDE DE DETERMINATION DE LA TEMPERATURE DE DISQUES DANS UN EMBRAYAGE A DISQUES MULTIPLES

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**23.08.2006 Patentblatt 2006/34**

(73) Patentinhaber: **GKN Driveline International GmbH 53797 Lohmar (DE)**

(72) Erfinder: **PFEIFER, Ralf 51429 Bensberg (DE)**

(74) Vertreter: **Oberwalleney, Stephan Neumann Müller Oberwalleney & Partner Patentanwälte Overstolzenstrasse 2a 50677 Köln (DE)**

(56) Entgegenhaltungen:
| | |
|---|---|
| DE-A1- 3 540 719 | DE-A1- 4 124 722 |
| DE-A1- 10 028 708 | DE-A1- 10 155 459 |
| DE-A1- 10 214 546 | DE-A1- 19 602 006 |
| DE-B4- 19 815 259 | FR-A- 2 593 287 |
| FR-A- 2 828 719 | GB-A- 2 245 367 |
| US-A- 5 337 866 | US-A- 6 152 275 |

• **PROF W. BEITZ PROF. K-H KÜTTNER: 'Dubbel Taschenbuch für den Maschinenbau', Bd. 18, SPRINGER-VERLAG, BERLIN, ISBN 10124262 Artikel '3.4.2 Reibschlüssige Schaltkupplungen', Seite G69**

**EP 1 692 477 B2**

## Beschreibung

Die Erfindung betrifft ein Verfahren zum Bestimmen der Lamellentemperatur einer Lamellenkupplung über der Zeit, wobei die.Lamellenkupplung zum Einsatz im Antriebsstrang eines Kraftfahrzeugs dient und in einem Gehäuse in Öl laufende Kupplungslamellen aufweist. Dabei wird die ermittelte Lamellentemperatur für Regeleingriffe in den Antriebsstrang des Kraftfahrzeugs verwendet.

Lamellenkupplungen zur Übertragung von Drehmomenten im Antriebsstrang von Kraftfahrzeugen sind grundsätzlich bekannt. Beispielsweise zeigt die DE 199 02 388 C2 eine Kupplung zur regelbaren Übertragung eines Drehmoments auf die Achsen eines Kraftfahrzeugs. Diese umfaßt eine Welle und ein Gehäuse, die relativ zueinander drehbar gelagert sind. Im Gehäuse sind in Parallelschaltung eine Reibungskupplung mit zwei Reiblamellensätzen und eine Viscokupplung mit zwei Lamellensätzen angeordnet. Die beiden Lamellensätze umfassen jeweils mit der Welle drehfest verbundene Innenlamellen sowie axial abwechselnd hierzu angeordnete mit dem Gehäuse drehfest verbundene Außenlamellen. Durch die Parallelschaltung wird die hohe Drehmomentkapazität der Reibungskupplung mit dem empfindlichen Ansprechverhalten der Viscokupplung verbunden.

Bei der regelmäßigen und intensiven Nutzung einer Lamellenkupplung entsteht Wärme, die zuverlässig abgeführt oder deren Entwicklung überwacht werden muß, um ein Überhitzen der Kupplungslamellen zu vermeiden. Dabei ist eine Temperaturmessung, insbesondere bei nicht raumfest gestalteten Kupplungslamellen, an der Oberfläche der Kupplungslamellen nur schwer oder gar nicht 'möglich.

Aus der WO 03/016743 A1 ist ein Verfahren zum Ansteuern einer Kupplung eines automatisierten Schaltgetriebes bekannt, bei dem ein Greifpunkt der Kupplung in Abhängigkeit der Kupplungstemperatur bestimmt und bei der Ansteuerung der Kupplung berücksichtigt wird. Dabei wird die Temperatur in der Kupplung sowie die der Kupplung zugeführte Reibleistung mittels eines Temperaturmodells berechnet. Zur Betätigung der Kupplung ist eine Vorrichtung vorgesehen, welche einen Motor und ein Ausrücksystem aufweist, mit dem die Kupplung geschaltet werden kann.

Aus der US-A-5337866 und der US-A-6152275 sind Verfahren zum Bestimmen der Temperatur einer Lamellenkupplung. GB-A-2245367 offenbart ein Verfahren zum Bestimmen der Lamellentemperatur.

Hiervon ausgehend ist es Aufgabe der Vorliegenden Erfindung, ein Verfahren zum Bestimmen der Lamellentemperatur einer Lamellenkupplung vorzuschlagen, das einfach durchführbar ist gute genäherte Ergebnisse liefert. Nach einer weiterführenden Aufgabe ist eine Art der Verwendung der Lamellentemperatur für Regeleingriffe in den Antriebsstrang vorzuschlagen.

Diese Aufgabe wird erfindungsgemäß durch ein Verfahren gemäß Anspruch 1 zum Bestimmen der Lamellentemperatur einer Lamellenkupplung über der Zeit gelöst, wobei die Lamellenkupplung zum Einsatz im Antriebsstrang eines Kraftfahrzeugs dient und in einem Gehäuse in Öl laufende Kupplungslamellen aufweist.

Durch dieses Verfahren läßt sich die Lamellentemperatur zuverlässig näherungsweise ermitteln, so daß hiervon abhängig Regeleingriffe in die Lamellenkupplung oder andere im Antriebsstrang des Kraftfahrzeugs befindliche Aggregate vorgenommen werden können. Demnach könnte die Reibleistung entweder durch Betätigung der Lamellenkupplung selbst im Sinne eines verringerten Reibmoments, aber auch durch Drosselung des Motors und damit des erzeugten Antriebsmoments reduziert werden. Auf diese Weise wird die Lamellenkupplung vor Überhitzung geschützt und hat somit eine längere Lebensdauer. Die Referenztemperatur ist die Temperatur eines Mediums oder Bauteils, an das die Wärme der Kupplungslamellen unmittelbar oder mittelbar abgeführt wird. Vorzugsweise wird als Referenztemperatur die Öltemperatur des in der Lamellenkupplung zur Schmierung und Kühlung vorhandenen Öls verwendet, da die Öltemperatur mit der Lamellentemperatur über Leistungs-, Wärmespeicher- und Wärmeübergangswerte verknüpft ist. Alternativ hierzu könnte auch die Gehäusetemperatur der Lamellenkupplung als Referenztemperatur verwendet werden, wobei sie aufgrund weiterer Randbedingungen etwas schlechtere Ergebnisse bei der Ermittlung der Lamellentemperatur liefern würde. Die Lamellenkupplung gibt Wärme an die Umgebung ab, so daß die Umgebungstemperatur, wenn auch ein etwas ungenauer, Gradmesser für die Wärmeabfuhr ist. Die Umgebungstemperatur wird bei heutigen Kraftfahrzeugen üblicherweise ohnehin ermittelt und steht als Meßwert der zentralen Regeleinheit zur Fahrdynamikregelung des Kraftfahrzeuges zur Verfügung. Beim Einschalten des Kraftfahrzeugs wird die erste Lamellentemperatur einmalig festgesetzt. Dabei kann mit Festsetzen sowohl gemeint sein, daß ein Wert für die Lamellentemperatur bestimmt wird als auch, daß sie berechnet wird.

Auf diese Weise läßt sich die Lamellentemperatur zu einem aktuellen Zeitpunkt einfach auf Basis von in in heutigen Kraftfahrzeugen vorhandenen Regelsystemen vorhandenen Meßgrößen ohne komplizierte Wärmestromberechnungen ermitteln.

In Konkretisierung berechnen sich die Lamellentemperaturen für die auf den Startzeitpunkt folgenden Zeitpunkte näherungsweise nach der Formel

$$T_{Lam,i} = a_0 + a_1 \cdot \left( T_{Lam,i-1} - T_{Ref,i-1} \right) + a_2 \cdot \left| P_{i-1} \right| + a_3 \cdot \left| P_i \right| + T_{Ref,i}$$

wobei

$T_{Lam}$ die Lamellentemperatur,
$T_{Ref}$ die Referenztemperatur,
$|P|$ der Betrag der Reibleistung ist und
$a_0$ bis $a_3$ empirische Konstanten für feste Zeitintervalle einer definierten Länge sind.

Die Reibleistung wird dabei vorzugsweise aus der Drehzahldifferenz zwischen einem Eingang und einem Ausgang der Lamellenkupplung sowie dem aufgebrachten Sperrmoment berechnet. Vorzugsweise wird die Drehzahldifferenz zwischen dem Eingang und dem Ausgang der Lamellenkupplung aus den Drehzahlen der Räder dese Kraftfahrzeugs berechnet. Diese Informationen sind im Regelsystem zur Regelung der Fahrdynamik des Kraftfahrzeugs ohnehin verfügbar.

Die Berechnung der Lamellentemperatur muß immer in gleichen Zeitintervallen durchgeführt werden, die mit der Bestimmung der Koeffizienten $a_0$ bis $a_3$ festgelegt werden. Diese Koeffizienten sind kupplungsspezifisch und müssen anhand von Versuchsreihen an der jeweiligen Lamellenkupplung ermittelt werden. Vorzugsweise können verschiedene empirische Konstanten abgespeichert sein, so daß die Zeitintervalle, in denen die Referenztemperatur und die Reibleistung gemessen und die Lamellentemperatur berechnet wird, entsprechend unterschiedlich lang sind. Die Zeitintervalle können durch die Wahl der Koeffizienten während des Verfahrens so gewählt werden, daß sie an den jeweiligen Fahrzustand des Kraftfahrzeugs angepaßt sind. So sind beispielsweise bei konstanter Fahrt auf trockener Fahrbahn Koeffizienten gewählt, mit denen die Referenztemperatur und die Reibleistung in größeren Zeitintervallen gemessen und die Lamellentemperatur berechnet wird. Demgegenüber können bei Fahrt durch schweres, unwegiges Gelände die Koeffizienten so gewählt werden, daß die Referenztemperatur und die Reibleistung in kürzeren Zeitabständen gemessen und die Lamellentemperatur berechnet wird. Durch adaptive Wahl der Koeffizienten wird effektiv verhindert, daß die Lamellenkupplung überhitzt.

Bei der Ermittlung der ersten Lamellentemperatur soll zwischen einem Zustand, bei dem das Fahrzeug längere Zeit abgestellt war und die, Lamellen die Umgebungstemperatur angenommen haben, und einem Zustand, bei dem das Fahrzeug nur kurz abgestellt war, unterschieden werden. Im letzteren Fall kann die Lamellentemperatur noch so erheblich sein, daß dies für einen wirksamen Regeleingriff berücksichtigt werden sollte. Nach einer vereinfachten Setzung ist vorgesehen, daß die erste Lamellentemperatur in Abhängigkeit von einer Stillstandszeitdauer zwischen dem letzten Ausschalten und dem erneuten Anschalten des Kraftfahrzeuges gesetzt wird, wobei die erste Lamellentemperatur gleich der aktuellen Referenztemperatur gesetzt wird, wenn die Stillstandszeitdauer eine vorbestimmte Zeitdauer überschritten hat. Die erste Lamellentemperatur kann nach einer vereinfachten Setzung auch in Abhängigkeit von dem Verhältnis der vor dem Abschalten des Kraftfahrzeugs zuletzt berechneten Lamellentemperatur zu der vor dem Abschalten des Kraftfahrzeugs zuletzt gemessenen Referenztemperatur gesetzt werden, wobei die erste Lamellentemperatur gleich der aktuellen Referenztemperatur gesetzt wird, wenn das besagte Verhältnis kleiner oder gleich einem vorbestimmten Wert x ist. Liegt das besagte Verhältnis über dem vorbestimmten Wert, wird die erste Lamellentemperatur vorzugsweise in Abhängigkeit von dem Verhältnis einer für den aktuellen Zeitpunkt genäherten Lamellentemperatur zu der aktuellen Referenztemperatur gesetzt, wobei die erste Lamellentemperatur gleich der aktuellen Referenztemperatur gesetzt wird, wenn das besagte Verhältnis kleiner oder gleich dem vorbestimmten Wert ist.

Allgemein berechnet sich die für den aktuellen Zeitpunkt genäherte Lamellentemperatur vorzugsweise unter anderem aus

- der vor dem Abschalten des Kraftfahrzeugs zuletzt gemessenen Referenztemperatur,
- der vor dem Abschalten des Kraftfahrzeugs zuletzt berechneten Lamellentemperatur und
- der aktuell gemessenen Referenztemperatur.

In Konkretisierung wird die für den ersten Zeitpunkt genäherte Lamellentemperatur nach der Formel

$$T_{Lam,0} := a_0 \cdot \frac{a_1^n - 1}{a_1 - 1} + a_1^n \cdot \left(T_{Lam,Stop} - T_{Ref,Stop}\right) + T_{Ref,0},$$

berechnet, wobei

$T_{Lam,Stop}$ die Lamellentemperatur vor n Zeitintervallen,
$T_{Ref,Stop}$ die Referenztemperatur vor n Zeitintervallen,

$T_{Ref,0}$      die aktuelle Referenztemperatur,

$n$      die Anzahl der Zeitintervalle zwischen letztem Ausschalten des Kraftfahrzeugs und aktuellem Zeitpunkt und

$a_0$ und $a_1$      empirische Konstanten sind.

Nach einer vereinfachten Setzung ist nach Durchführung dieser Berechnung vorgesehen, daß die erste Lamellentemperatur gleich der ersten Referenztemperatur gesetzt wird, wenn das Verhältnis aus berechneter erster Lamellentemperatur und erster Referenztemperatur kleiner oder gleich einem vorbestimmten Wert x ist. Der für den ersten Zeitpunkt berechnete Wert der ersten Lamellentemperatur kommt damit nur zum Ansatz, wenn die Stillstandszeitdauer kleiner ist als die vorbestimmte Zeitdauer und, wenn das Verhältnis von zuletzt berechneter Lamellentemperatur zur zuletzt gemessener Referenztemperatur größer als der vorbestimmte Wert x ist und, wenn das Verhältnis von berechneter erster Lamellentemperatur zur ersten gemessenen Referenztemperatur größer als der vorbestimmte Wert x ist. So wird gewährleistet, daß die erste näherungsweise berechnete Lamellentemperatur möglichst nah am tatsächlichen Wert der Lamellentemperatur liegt.

Um ein Überhitzen der Lamellenkupplung wirksam zu vermeiden, sind nach einer vorteilhaften Weiterbildung als weitere Verfahrensschritte vorgesehen:

- Vergleichen der jeweils berechneten Lamellentemperatur mit einer zulässigen ersten Temperatur und
- Eingriff in den Antriebsstrang derart, daß die zugeführte Reibleistung abnimmt, wenn die berechnete Lamellentemperatur die zulässige erste Temperatur übersteigt.

Vorzugsweise erfolgt der Eingriff - in Abhängigkeit vom Fahrzustand des Kraftfahrzeugs - derart, daß die berechnete Lamellentemperatur eine oberhalb der ersten Temperatur liegende zweite Temperatur nicht übersteigt, wobei die erste Temperatur die Temperatur ist, bis zu der die Lamellenkupplung als dauerfest definiert wird, und die höhere zweite Temperatur die Temperatur ist, oberhalb derer die Lamellenkupplung als sofort unbrauchbar angesehen wird, wobei ferner die Kupplungslamellen im Temperaturbereich zwischen der ersten und der zweiten Temperatur als zeitfest angesehen werden. Das bedeutet, daß bereits bei Überschreiten des als dauerfest angenommenen Temperaturbereichs der Lamellenkupplung Gegenmaßnahmen zur Vermeidung von Überhitzung eingeleitet werden. Eine zusätzliche Sicherheit kann dadurch eingeführt werden, daß die beiden Temperaturen für die Berechnung niedriger angesetzt werden, als es für die Haltbarkeit und Funktion tatsächlich erforderlich ist.

In Konkretisierung ist vorgesehen, daß eine im zeitfesten Temperaturbereich der Kupplungslamellen liegende Grenztemperatur, bis zu der die Lamellenkupplung betrieben wird, betriebsabhängig dynamisch angepaßt wird. Dabei wird die Zeitdauer, in der die Kupplungslamellen oberhalb der ersten Temperatur betrieben werden, erfaßt und die Grenztemperatur wird mit wachsender Dauer des Kupplungsvorganges dynamisch gesenkt. Auf diese Weise wird gewährleistet, daß die Lamellenkupplung nur im konstruktiv festgelegten Bereich betrieben wird. Schäden, die durch den Betrieb der Lamellenkupplung im zeitfesten Bereich hervorgerufen werden, haben keine große Auswirkung auf die Gesamtlebensdauer der Lamellenkupplung. Alternativ hierzu kann die zulässige Grenztemperatur, bis zu der die Lamellenkupplung betrieben wird, auch statisch festgelegt sein.

Es ist weiterhin vorgesehen, daß die zulässige erste Temperatur und die zulässige zweite Temperatur unter Berücksichtigung von eventuell vorangegangenen Überhitzungen oberhalb der ersten Temperatur regelmäßig neu berechnet und angepaßt werden. Auf diese Weise ein guter Kompromiß zwischen Einsatzbereitschaft der Kupplung unter schwierigen Bedingungen mit langer Betriebsdauer einerseits, und der gesamten Lebensdauer der Kupplung andererseits erreicht.

Nach einer weiterführenden Lösung der der Erfindung zugrundeliegenden Aufgabe ist vorgesehen, daß die Lamellenkupplung mittels einer elektronischen Regeleinheit zur Regelung der Fahrdynamik des Kraftfahrzeugs gesteuert wird, wobei in kritischen Fahrzuständen ein Eingriff in die Fahrdynamik des Kraftfahrzeugs gegenüber eine Begrenzung der Betriebstemperatur der Lamellenkupplung Vorrang hat. So wird verhindert, daß ein an sich erforderlicher Regeleingriff in die Lamellenkupplung zur Begrenzung der Betriebstemperatur erfolgt, wenn dies die Fahrstabilität des Kraftfahr zeugs negativ beeinflussen würde.

Ein bevorzugtes Ausführungsbeispiel der Erfindung geht aus der Zeichnung hervor. Hierin zeigt

Figur 1      einen Verfahrensablauf zum Regeln der Betriebstemperatur einer Lamellenkupplung;

Figur 2      beispielhaft den Temperaturverlauf bei Betrieb der Lamellenkupplung und

Figur 3      ein Leistungsdiagramm mit Darstellung des Sperrmoments über der Winkelgeschwindigkeit.

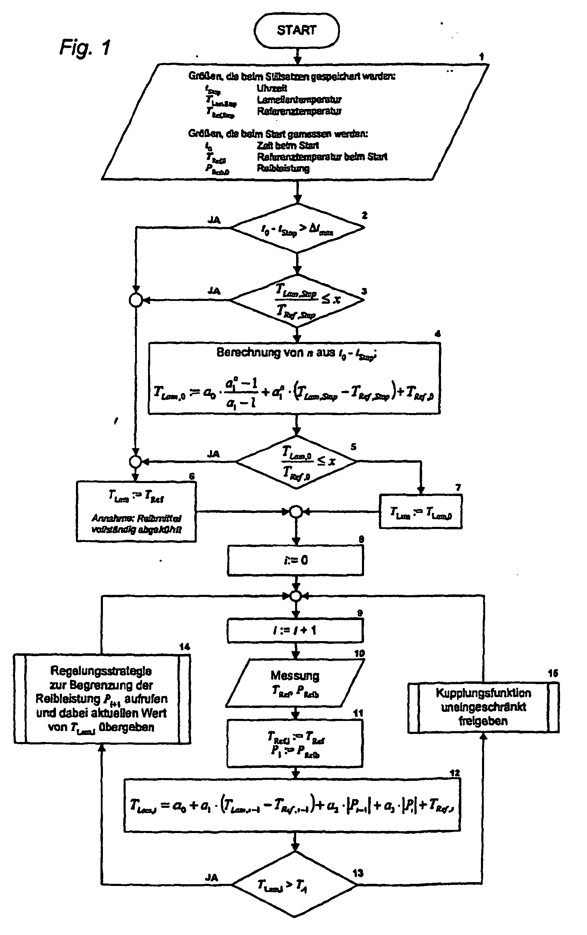

Aus Figur 1 ist ersichtlich, daß das Verfahren zum Regeln der Betriebstemperatur der Lamellenkupplung zweigeteilt ist und eine Startphase mit den Verfahrensschritten 1 bis 7 sowie eine sich daran anschließende Regelphase mit den Verfahrensschritten 8 bis 15 umfaßt. Die Regelung der Betriebstemperatur der Lamellenkupplung ist deswegen wichtig, weil bei regelmäßiger und intensiver Nutzung Wärme entsteht, die überwacht und gegebenenfalls zuverlässig abgeführt werden muß, um eine Überhitzung der Kupplungslamellen und damit eine Verkürzung der Lebensdauer der Lamellenkupplung zu vermeiden. Hierfür ist es erforderlich, die Temperatur der Kupplungslamellen ständig näherungsweise zu ermitteln. Bevor jedoch der Verfahrensablauf zum Regeln der Betriebstemperatur anhand von Figur 1 beschrieben wird, wird zunächst die Herleitung des Verfahrens zur Temperaturermittlung erläutert.

Das vorliegende Verfahren zum Bestimmen der Lamellentemperatur basiert auf einem Wärmestrommodell. Bekanntermaßen läßt sich der Wärmestrom an einem Körper, der mit seiner Umgebung Wärme austauschen kann und gleichzeitig ein gewisses Wärmespeichervermögen besitzt, mit der Formel

$$ m \cdot c \cdot \Delta \dot{T} + \alpha \cdot A \cdot \Delta T = \dot{Q} \qquad (1) $$

beschreiben, wobei

$m$     die Masse des Bauteils [kg],
$c$     die spezifische Wärmekapazität des Bauteils [J/(kg·K)],
$\alpha$     die Wärmeübergangszahl [W/(m²·K)],
$A$     die wärmeabstrahlende Fläche [m²],
$\Delta T$     die Temperaturdifferenz zwischen Umgebung und Oberfläche [K],
$\Delta \dot{T}$     die Änderung dieser Temperaturdifferenz [K/s] und
$\dot{Q}$     der Wärmestrom (Leistung) [W]

ist. Dabei hat sich in der Praxis herausgestellt, daß gerade bei Bauteilen mit einer gemischten stofflichen Zusammensetzung (z.B. Stahl, Öl, Luft) eine analytische Berechnung der für den Wärmeübergang relevanten Werte, nämlich die Oberflächeneigenschaften ($\alpha \cdot A$) aber auch die Wärmespeicherkapazität ($m.c$), schwierig ist.

Einen Lösungsansatz stellt die Verwendung einer Referenztemperatur eines mit den Kupplungslamellen zumindest mittelbar im Wärmeaustausch stehenden Mediums oder Bauteils sowie die der Lamellenkupplung zugeführte Reibleistung als Eingangswerten dar, um Rückschlüsse auf die Lamellentemperatur ziehen zu können.

Eine Verbindung dieses Ansatzes mit der oben vorgestellten Differentialgleichung liefert folgenden formelmäßigen Zusammenhang zur Berechnung der Lamellentemperatur zum Zeitpunkt i aus der letzten Berechnung der Lamellentemperatur, der Referenztemperatur und der zugeführten Leistung:

$$ T_{Lam,i} = \left( T_{Lam,i-1} - T_{Ref,i-1} - \frac{M_{i-1} \cdot \Delta \omega_{i-1}}{\alpha \cdot A} \right) \cdot e^{\frac{\alpha \cdot A}{m \cdot c} \Delta t} + T_{Ref,i} + \frac{M_i \cdot \Delta \omega_i}{\alpha \cdot A} \qquad (2) $$

wobei

$T_{Lam}$     die Reibmitteltemperatur in [K] oder [°C],
$T_{Ref}$     die Referenztemperatur in [K] oder [°C],
$M \cdot \Delta \omega$     die in den Lamellen erzeugte Reibleistung,
$m \cdot c$     die Wärmekapazität des Bauteils,
$\alpha \cdot A$     der Wärmeübergang am Bauteil,
$i, i-1$     die Zeitpunkte, an denen jeweils eine Messung/Berechnung von $T_{Ref}$, $T_{Lam}$ und $M \cdot \Delta \omega$ erfolgt und
$\Delta t$     die Zeit zwischen der i-ten und (i-1)-ten Messungen in [s] ist.

Die Referenztemperatur ist die Temperatur des Mediums oder Körpers, an welches die Wärme des Reibmittels abgeführt wird. Im Falle einer naßlaufenden Lamellenkupplung wird als Referenztemperatur vorzugsweise die Öltemperatur verwendet, um eine besonders gute Näherung zu erhalten. Grundsätzlich kann die Referenztemperatur aber auch am Kupplungsgehäuse oder in einem die Lamellenkupplung umgebenden Kühlluftstrom gemessen werden. Dabei nimmt die Zuverlässigkeit der Temperaturberechnung jedoch mit größerer Entfernung des Referenzmediums von der Lamellenkupplung ab. Mit Koeffizienten vereinfacht läßt sich diese Gleichung umschreiben zu

$$T_{Lam,i} = \left( T_{Lam,i-1} - T_{Ref,i-1} - \frac{|P_{i-1}|}{c_1} \right) \cdot e^{-\frac{c_1}{c_2}\Delta t} + T_{Ref,i} + \frac{|P_i|}{c_1} \qquad (3)$$

wobei

$T_{Lam}$    die Reibmitteltemperatur in [K] oder [˚C],
$T_{Ref}$    die Referenztemperatur in [K] oder [˚C],
$P$    die Reibleistung,
$c_1$    der Wärmeübergang am Bauteil,
$c_2$    die Wärmekapazität des Bauteils und
$\Delta t$    die Zeit zwischen der i-ten und (i-1)-ten Messungen in [s] ist.

Diese Formel ist für die Ermittlung der Lamellentemperatur nicht besonders geeignet, da sich der Einfluß von Rundungsfehlern in dieser iterativ durchgeführten Berechnung nachteilig bemerkbar macht. Aus diesem Grunde wurde die Berechnung nach empirischen Gesichtspunkten wie folgt umgestellt und um empirische Konstanten ergänzt:

$$T_{Lam,i} = a_0 + a_1 \cdot \left( T_{Lam,i-1} - T_{Ref,i-1} \right) + a_2 \cdot |P_{i-1}| + a_3 \cdot |P_i| + T_{Ref,i} \qquad (4)$$

wobei

$T_{Lam}$    die Lamellentemperatur,
$T_{Ref}$    die Referenztemperatur,
$|P|$    der Betrag der Reibleistung ist und
$a_0$ bis $a_3$    empirische Konstanten sind.

Diese Gleichung bietet den Vorteil, daß sie nur einfache Operationen in Form von Multiplikationen und Additionen bzw. Subtraktionen und wenige zeit- sowie rundungsfehlerträchtige Operationen enthält. Die Reibleistung $P_i$ wird aus der Drehzahldifferenz zwischen dem Eingang und dem Ausgang der Lamellenkupplung sowie dem aufgebrachten Sperrmoment berechnet. Dabei kann die Drehzahldifferenz aus den unterschiedlichen Drehzahlen der Räder bzw. der unterschiedlichen Drehzahlen der Achsen des Kraftfahrzeugs ermittelt werden, deren Werte bei heutigen Kraftfahrzeugen durch ein Antiblockiersystem bzw. eine elektronische Fahrdynamikregelung zur Verfügung gestellt werden können. Die Berechnung der Lamellentemperatur muß immer in festen Zeitintervallen durchgeführt werden, welche mit der Bestimmung der Koeffizienten $a_0$ bis $a_3$ festgelegt werden. Die Koeffizienten $a_0$ bis $a_3$ sind kupplungsspezifisch und müssen anhand von Versuchsreihen an der jeweiligen Lamellenkupplung ermittelt werden. Sie ergeben sich aus folgender Matrix-Gleichung:

$$\begin{pmatrix} a_0 & a_1 & a_2 & a_3 \end{pmatrix}^T = \left( u^T \cdot u \right)^{-1} \cdot u^T \cdot y \qquad (5)$$

Die Matrizen u und y setzen sich wiederum aus Meßreihen zusammen, welche als Eingangswerte die ermittelte Lamellentemperatur, die Referenztemperatur sowie das Drehmoment der Lamellenkupplung und die Drehzahldifferenz zwischen Eingang und Ausgang der Lamellenkupplung umfassen.

$$\mathbf{u} = \begin{pmatrix} 1 & T_{Lam,0} - T_{Ref,0} & |M_0 \cdot \Delta n_0| & |M_1 \cdot \Delta n_1| \\ 1 & T_{Lam,1} - T_{Ref,1} & |M_1 \cdot \Delta n_1| & |M_2 \cdot \Delta n_2| \\ \vdots & \vdots & \vdots & \vdots \\ 1 & T_{Lam,n-1} - T_{Ref,n-1} & |M_{n-1} \cdot \Delta n_{n-1}| & |M_n \cdot \Delta n_n| \end{pmatrix} \qquad \mathbf{y} = \begin{pmatrix} T_{Lam,1} - T_{Ref,1} \\ T_{Lam,2} - T_{Ref,2} \\ \vdots \\ T_{Lam,n-1} - T_{Ref,n-1} \end{pmatrix} \qquad (6)$$

Im folgenden wird nun gemäß Figur 1 der Verfahrensablauf basierend auf der oben genannten Herleitung erläutert. Die Startphase des Verfahrens dient dazu, schon bei Inbetriebnahme des Kraftfahrzeuges einen guten Näherungswert für die aktuelle Lamellentemperatur festzusetzen. Je nach Stillstandszeit des Kraftfahrzeuges, kann die Kupplungstemperatur und damit auch die Lamellentemperatur unterschiedlich hoch sein. War das Fahrzeug beispielsweise längere Zeit abgestellt, haben sowohl die Kupplungslamellen als auch das Öl der Lamellenkupplung Umgebungstemperatur angenommen. War das Kraftfahrzeug dagegen nur kurze Zeit abgestellt, oder wurde der Motor in schwerem Gelände abgewürgt, so könnte die Lamellentemperatur noch so erheblich sein, daß dies berücksichtigt werden müßte.

Hierfür wird nach Start des Kraftfahrzeuges die beim letzten Betrieb des Kraftfahrzeugs zuletzt berechnete Lamellentemperatur $T_{Lam.Stop}$, sowie eine zuletzt gemessene Referenztemperatur $T_{Ref,Stop}$ und die zugehörige Uhrzeit $t_{Stop}$ aus einem Datenspeicher abgerufen sowie die aktuell vorliegende Referenztemperatur $\mathbf{T_{Ref,0}}$, die aktuelle Zeit $t_0$ und die aktuelle Reibleistung $P_0$ gemessen. Dies ist in Figur 1 als **Verfahrensschritt 1** dargestellt. Als Referenztemperatur können verschiedene Temperaturen dienen, wie beispielsweise die Öltemperatur des im Gehäuse zu Kühl- und Schmierzwecken befindlichen Öls oder die Gehäusetemperatur.

In **Verfahrensschritt 2** werden die aktuelle Zeit $t_0$ mit der Uhrzeit $t_{Stop}$ beim Stillsetzen des Kraftfahrzeugs verglichen. Ist dieser Wert $t_0 - t_{Stop}$ größer als ein vorbestimmtes Zeitintervall $\Delta t_{max}$, so wird angenommen, daß die Lamellentemperatur ausreichend stark abgesunken ist und daß die für die Berechnung der Folgetemperatur erforderliche erste Lamellentemperatur $T_{Lam,0}$ gleich der aktuellen Referenztemperatur $T_{Ref,0}$ gesetzt werden kann. Dies ist als **Verfahrensschritt 6** dargestellt.

Ist das Zeitintervall, in dem das Kraftfahrzeug bzw. die Lamellenkupplung außer Betrieb war, kürzer als das vorgegebene Zeitintervall $\Delta t_{max}$, so wird in **Verfahrensschritt 3** das Verhältnis von beim letzten Stillsetzen zuletzt berechneter Lamellentemperatur $T_{Lam,stop}$ zu zuletzt gemessener Öltemperatur $T_{Ref,stop}$ ermittelt und mit einem vorgegebenen Wert x verglichen. Dieses Verhältnis kann minimal den Wert 1 annehmen, nämlich dann, wenn die zuletzt berechnete Lamellentemperatur gleich der zuletzt gemessenen Referenztemperatur ist. War die vor dem Stillsetzen zuletzt berechnete Lamellentemperatur viel größer als die vor dem Stillsetzen zuletzt gemessene Referenztemperatur, so ist dies beim Neustart zu berücksichtigen. Was dieser Wert jedoch kleiner oder gleich dem vorbestimmten Wert x, d.h. die letzte berechnete Lamellentemperatur und die gemessene Öltemperatur lagen nahe beieinander, dann wird die erste Lamellentemperatur $T_{Lam,0}$ gleich der gemessenen ersten Referenztemperatur $T_{Ref,0}$ gesetzt. Dies ist als **Verfahrensschritt 6** dargestellt.

Ist jedoch das Verhältnis von zuletzt gespeicherter errechneter Lamellentemperatur $T_{Lam,Stop}$ zu zuletzt ermittelten Referenztemperatur $T_{Ref,Stop}$ größer als dieser vorbestimmte Wert x, so wird die aktuelle Lamellentemperatur mittels einer Gleichung näherungsweise berechnet, wie als **Verfahrensschritt 4** dargestellt. Unter Berücksichtigung dessen, daß die Reibleistung beim Ausschalten zu Null wird, leitet sich diese Gleichung unmittelbar aus der oben genannten Gleichung (4) her. Sie lautet:

$$T_{Lam,0} := a_0 \cdot \frac{a_1^n - 1}{a_1 - 1} + a_1^n \cdot \left( T_{Lam,Stop} - T_{Ref,Stop} \right) + T_{Lam,0} \qquad (5)$$

Darin sind

| | |
|---|---|
| $T_{Lam,Stop}$ | die Lamellentemperatur vor n Zeitintervallen, |
| $T_{Ref,stop}$ | die Referenztemperatur vor n Zeitintervallen, |
| $T_{Ref,0}$ | die aktuelle Referenztemperatur, |
| $n$ | die Anzahl der Zeitintervalle zwischen letztem Ausschalten des Kraftfahrzeugs und aktuellem Zeitpunkt und |
| $a_0$ und $a_1$ | die empirischen Konstanten. |

Der Wert n gibt die Anzahl der Zeitintervalle an, die zwischen dem Zeitpunkt des letzten Ausschaltens des Kraftfahrzeug und dem aktuellen Zeitpunkt des erneuten Starts liegen, der mit dem Index 0 definiert wird.

In **Verfahrensschritt 5** wird das Verhältnis von näherungsweise berechneter Lamellentemperatur $T_{Lam,0}$ zu aktueller Referenztemperatur $T_{Ref,0}$ mit dem vordefinierten Wert x verglichen, analog zu Verfahrensschritt 3. Ist dieses Verhältnis kleiner oder gleich dem vorbestimmten Wert x, d.h. die Lamellentemperatur ist ausreichend niedrig, dann wird die erste Lamellentemperatur $T_{Lam,0}$ gleich der gemessenen ersten Referenztemperatur $T_{Ref,0}$ gesetzt, wie in **Verfahrensschritt 6** gezeigt.

Ist das besagte Verhältnis $T_{Lam,0}$ zu $T_{Ref,0}$ jedoch größer als der vorbestimmte Wert x, d.h. die Lamellentemperatur ist hoch, so wird die erste näherungsweise berechnete Lamellentemperatur $T_{Lam,0}$ verwendet, **Verfahrensschritt 7**.

Die eigentliche Regelphase gemäß den Verfahrensschritten 9 bis 15 beginnt erst nachdem die erste Lamellentemperatur $T_{Lam,0}$ zum Startzeitpunkt des Kraftfahrzeugs bestimmt wurde. In der Regelphase wird die Lamellentemperatur näherungsweise errechnet, um ein Überhitzen der Kupplungslamellen durch entsprechenden Regeleingriff rechtzeitig zu verhindern. Ausgehend von der in der Startphase ermittelten ersten Lamellentemperatur $T_{Lam,0}$ werden, wie oben beschrieben, in festen Zeitintervallen die Referenztemperatur $T_{Ref,i}$ eines mit den Kupplungslamellen zumindest mittelbar im Wärmeaustausch stehenden Mediums oder Bauteils gemessen, sowie die der Lamellenkupplung zugeführte Reibleistung $P_i$ ermittelt. Dabei wird der Startzeitpunkt gemäß **Verfahrensschritt 8** mit Index i=0 definiert und die jeweils folgenden **Verfahrensschritte 9** mit jeweiligem Index i + 1.

Die Lamellentemperatur $T_{Lam,i}$ wird in denselben Zeitintervallen berechnet, in denen die Referenztemperatur bzw. die Reibleistung ermittelt wird, **Verfahrensschritte 10 und 11.** Dabei berechnet sich die Lamellentemperatur $T_{Lam,i}$ aus der jeweils zu einem ein Zeitintervall früheren Zeitpunkt gemessenen Referenztemperatur, der zum früheren Zeitpunkt ermittelten Reibleistung, der zum früheren Zeitpunkt berechneten bzw. festgesetzten Lamellentemperatur, der im aktuellen Zeitpunkt gemessenen Referenztemperatur und der im aktuellen Zeitpunkt ermittelten Reibleistung gemäß der oben genannten Formel (4), die als **Verfahrensschritt 12** dargestellt ist. Insofern wird auf die obige Beschreibung Bezug genommen.

In einem weiteren **Verfahrensschritt 13** wird die jeweils berechnete Lamellentemperatur $T_{Lam,i}$ mit einer zulässigen Höchsttemperatur verglichen. Ergibt dieser Vergleich, daß die Lamellentemperatur einen kritischen Wert erreicht, so wird die Lamellenkupplung gemäß **Verfahrensschritt 14** derart betätigt, daß die zugeführte Reibleistung $P_1$ abnimmt. Ist die ermittelte Lamellentemperatur $T_{Lam,i}$ unkritisch, wird die Kupplungsfunktion freigegeben und die Lamellenkupplung kann bedarfsabhängig betrieben werden, wie als **Verfahrensschritt 15** dargestellt.

Für die Regelung der Lamellentemperatur können zwei unterschiedliche Verfahren angewendet werden. Nach einem statischen ersten Verfahren würde die Lamellenkupplung öffnen, sobald die ermittelte Lamellentemperatur einen fixen Höchstwert $T_{max}$ überschreitet. Bei einem Prioritätenkonflikt zwischen einer für die Fahrstabilität des Kraftfahrzeugs erforderlichen Schaltstellung und gleichzeitiger Gefahr für die Überhitzung der Lamellenkupplung, hat im Zweifel die Regelung der Fahrstabilität Vorrang.

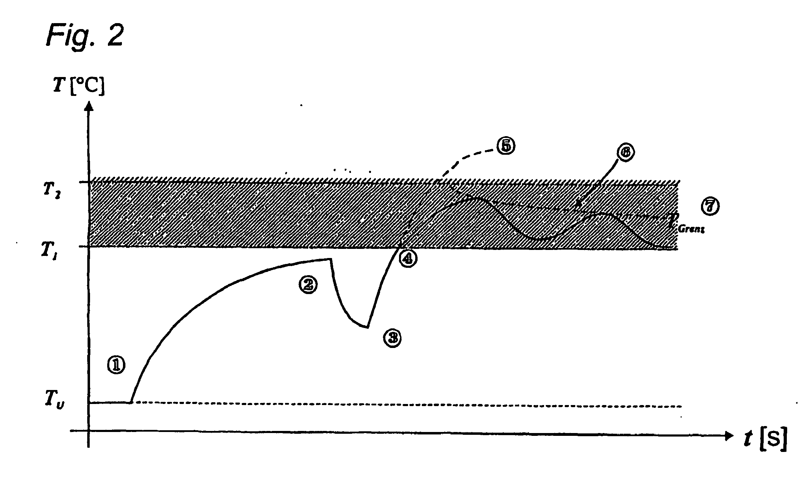

Um auch bei dauernder Kupplungsbetätigung ein Überhitzen der Lamellenkupplung zu vermeiden, ist ein alternatives zweites Verfahren mit einer dynamischen Temperaturanpassung vorgesehen. Hiermit wird eine begrenzte und kontrollierte Überlastung der Kupplungslamellen zugelassen. Figur 2 zeigt den beispielhaften Temperaturverlauf in einer Lamellenkupplung mit dynamisch angepaßten Höchsttemperaturen $T_1$, $T_2$ für die Kupplungslamellen. Hierfür sind eine niedrigere erste Temperatur $T_1$, bis zu der die Lamellenkupplung dauerfest ist, und eine höhere zweite Temperatur $T_2$ definiert, oberhalb derer die Lamellenkupplung durch Überhitzen sofort zerstört werden könnte. Dabei sind die Kupplungslamellen im Temperaturbereich zwischen den Temperaturen $T_1$ und $T_2$ zeitfest. Es ist vorgesehen, daß in dem Temperaturbereich unterhalb der Dauerfestigkeitstemperatur $T_1$ ($T_{Lam} < T_1$) das Kupplungsmoment entsprechend dem Leistungsbedarf der Lamellenkupplung geregelt wird. In dem Zeitfestigkeitstemperaturbereich $T_1 < T_{Lam} < T_2$ wird die Kupplungsleistung temperaturabhängig reduziert, wobei die Temperatur $T_2$ nicht überschritten werden darf. Ab Erreichen der ersten Temperatur $T_1$ wird die Lamellenkupplung so geregelt, daß die Reibleistung abnimmt und der Temperaturanstieg somit verlangsamt wird. Außerdem wird die Zeitdauer, in der die Kupplungslamellen oberhalb der ersten Temperatur $T_1$ betrieben werden, erfaßt. Hieraus werden verschiedene Maßnahmen abgeleitet. Zum einen wird eine zulässige Grenztemperatur $T_{Grenz}$ ($T_1 < T_{Grenz} < T_2$), bis zu der die Lamellenkupplung betrieben werden kann, mit wachsender Dauer des Kupplungsvorgangs dynamisch gesenkt, so daß die Lamellentemperatur an die erste Temperatur $T_1$ mit zunehmender Zeit herangeführt wird. Außerdem werden die erste Temperatur $T_1$ und die zweite Temperatur $T_2$ unter Berücksichtigung von vorangegangenen Überhitzungen regelmäßig neu berechnet und entsprechend korrigiert. Dabei werden die durch die Überhitzungen, d.h. Betrieb der Lamellenkupplung im zeitfesten Temperaturbereich, als Maß für bereits bestehende Vorschädigungen angenommen. Durch diese Maßnahmen wird ein Dauerschaden der Lamellenkupplung durch Überhitzung vermieden.

Aus Figur 2 geht beispielhaft der Temperaturverlauf in einem Modell mit variabler Temperaturanpassung hervor. Es ist ersichtlich, daß nach einer Aufheizphase der Lamellenkupplung von Punkt 1 nach Punkt 2, einer sich daran anschließenden vorübergehenden Abkühlung von Punkt 2 nach Punkt 3 und einer erneuten Aufheizung ab Punkt 3, die untere erste Temperatur $T_1$ beim Punkt 4 überschritten wird. Ohne weiteren Regeleingriff in die Lamellenkupplung und bei höher Reibleistung würde sich diese weiter erhitzen, wie aus der gestrichelten Linie von Punkt 4 nach Punkt 5 hervorgeht, und beim Überschreiten der zweiten Temperatur $T_2$ zerstört werden. Dies wird jedoch durch den Regeleingriff, welcher ab Überschreiten der ersten Temperatur $T_1$ erfolgt, verhindert, wobei die Kupplungsleistung herabgesetzt wird. Auf diese Weise bleibt die Lamellentemperatur innerhalb des zeitfesten Temperaturbereichs zwischen der ersten Temperatur $T_1$ und der zweiten Temperatur $T_2$ . Durch die Neuberechnung und Neufestsetzung der Grenztemperatur $T_{Grenz}$ wird die tatsächliche Kupplungstemperatur reduziert, so daß Überhitzungsschäden nur im konstruktiv festgelegten Bereich auftreten können. Ein Versagen der Lamellenkupplung aufgrund von Überschreiten der zweiten Temperatur $T_2$ wird wirkungsvoll verhindert. Auch bei diesem Regelmodell mit dynamisch angepaßten Temperaturen ist vorgesehen, daß bei Prioritätskonflikten zwischen der Regelung der Fahrdynamik des Kraftfahrzeugs und der Regelung der Lamellentemperatur die Fahrdynamikregelung Vorrang hat, damit ein Unfall des Kraftfahrzeugs vermieden wird.

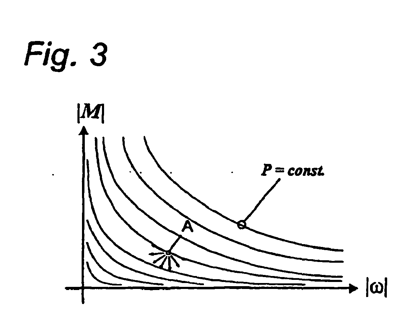

Figur 3 zeigt ein Leistungsdiagramm, in dem der Betrag der Winkelgeschwindigkeit $|\omega|$, die proportional zur Drehzahldifferenz der Reiblamellen ist, und der Betrag des Sperrmoments $|M|$ über den Achsen aufgetragen ist. Außerdem sind Leistungshyperbeln, d. h. Linien gleicher Leistung, ersichtlich, die mit P=const. beschriftet sind.

Der Punkt A zeigt beispielhaft einen Betriebspunkt der Lamellenkupplung, der die Lamellentemperatur über die Temperatur $T_{Grenz}$ oder $T_2$ hinausführen würde. Sobald ein Regeleingriff erforderlich wäre, könnte durch die Regelstrategie ein anderer Betriebspunkt unterhalb der Leistungshyperbel von A ausgewählt werden, um die Lamellenkupplung vor Überhitzung zu schützen. Dabei geben die Pfeile an, in welche Richtung der Betriebspunkt verschoben werden kann. Es ist ersichtlich, daß der Regeleingriff zur Begrenzung der Lamellentemperatur auf verschiedene Weise erfolgen kann. Zum einen kann das Reibmoment in der Kupplung so erhöht werden, daß die Drehzahl sinkt. Zum anderen kann das Reibmoment auch bei gleichzeitigem Zulassen einer Drehzahlerhöhung verringert werden. Um eine genaue Auswahl zu treffen, können in einer Regelstrategie dadurch auch fahrdynamische Kriterien berücksichtigt werden.

**Patentansprüche**

1. Verfahren zum Bestimmen der Lamellentemperatur einer Lamellenkupplung über der Zeit, wobei die Lamellenkupplung zum Einsatz im Antriebsstrang eines Kraftfahrzeugs dient und in einem Gehäuse in Öl laufende Kupplungslamellen aufweist, mit folgenden Verfahrensschritten:

   Festsetzen einer ersten Lamellentemperatur ($T_{Lam,0}$) zu einem Startzeitpunkt (i=0),
   Messen einer Referenztemperatur ($T_{Ref,i}$) eines mit den Kupplungslamellen zumindest mittelbar im Wärmeaustausch stehenden Mediums oder Bauteils in Zeitintervallen zwischen aufeinander folgenden Zeitpunkten (i = 0, 1, 2, ...), wobei als Referenztemperatur ($T_{Ref,i}$) die Öltemperatur des in der Lamellenkupplung zur Schmierung und Kühlung vorhandenen Öls oder die Gehäusetemperatur der Lamellenkupplung verwendet wird,
   Ermitteln der der Lamellenkupplung zugeführten Reibleistung ($P_i$) in denselben Zeitintervallen (i = 0, 1, 2, ...),
   Berechnen der folgenden Lamellentemperaturen ($T_{Lam,i}$) in denselben Zeitintervallen (i = 1, 2, ...) für jeweils folgende Zeitpunkte (i = 1, 2, ...) aus

   - der jeweils vorhergehenden Lamellentemperatur ($T_{Lam,i-1}$), nämlich der zum früheren Zeitpunkt (i-1) berechneten bzw. festgesetzten Lamellentemperatur ($T_{Lam,i-1}$ oder $T_{Lam,0}$),
   - der zu einem ein Zeitintervall früheren Zeitpunkt (i-1) gemessenen Referenztemperatur ($T_{Ref,i-1}$) und der im aktuellen Zeitpunkt (i) gemessenen Referenztemperatur ($T_{Ref,i}$), und
   - der zum früheren Zeitpunkt (i-1) ermittelten Reibleistung ($P_{i-1}$) und der im aktuellen Zeitpunkt (i) ermittelten Reibleistung ($P_i$);

   Vergleichen der jeweils berechneten Lamellentemperatur ($T_{Lam,i}$) mit einer zulässigen ersten Temperatur ($T_1$);
   Eingriff in den Antriebsstrang derart, daß die zugeführte Reibleistung ($P_i$) abnimmt, wenn die berechnete Lamellentemperatur ($T_{Lam,i}$) die zulässige erste Temperatur ($T_1$) übersteigt.

2. Verfahren nach Anspruch 1,
   **dadurch gekennzeichnet,**
   **daß** die Berechnung der Lamellentemperaturen ($T_{Lam,i}$) für jeweils folgende Zeitpunkte (i = 1, 2, ...) näherungsweise nach der Formel

$$T_{Lam,i} = a_0 + a_1 \cdot \left(T_{Lam,i-1} - T_{Ref,i-1}\right) + a_2 \cdot \left|P_{i-1}\right| + a_3 \cdot \left|P_i\right| + T_{Ref,i}$$

erfolgt, wobei

$T_{Lam}$ die Lamellentemperatur,
$T_{Ref}$ die Referenztemperatur,
$|P|$ der Betrag der Reibleistung ist und
$a_0$ bis $a_3$ empirische Konstanten für feste Zeitintervalle einer definier- ten Länge sind.

**3.** Verfahren nach Anspruch 2,
**dadurch gekennzeichnet,**
**daß** verschiedene empirische Konstanten ($a_0$ bis $a_3$) für verschiedene feste Zeitintervalle zwischen aufeinanderfolgenden Zeitpunkten (i=0, 1, 2, ...) abgespeichert werden können.

**4.** Verfahren nach Anspruch 3,
**dadurch gekennzeichnet,**
**daß** die Länge der Zeitintervalle zwischen zwei aufeinander folgenden Zeitpunkten (i=0, 1, 2, ...) unter gleichzeitigem Wechsel von wenigstens einer der verwendeten empirischen Konstanten ($a_0$ bis $a_3$) während des Verfahrens ge-ändert werden kann.

**5.** Verfahren nach einem der Ansprüche 1 bis 4,
**dadurch gekennzeichnet,**
**daß** die erste Lamellentemperatur ($T_{Lam,0}$) in Abhängigkeit von einer Stillstandszeitdauer ($t_0 - t_{Stop}$) zwischen dem letzten Ausschalten und erneuten Anschalten des Kraftfahrzeugs gesetzt wird, wobei die erste Lamellentemperatur ($T_{Lam,0}$) gleich der aktuellen Referenztemperatur ($T_{Ref,0}$) gesetzt wird, wenn die Stillstandszeitdauer ($t_0 - t_{Stop}$) größer als eine definierte Zeitdauer ($\Delta t_{max}$) ist.

**6.** Verfahren nach einem der Ansprüche 1 bis 5,
**dadurch gekennzeichnet,**
**daß** die erste Lamellentemperatur ($T_{Lam,0}$) in Abhängigkeit von dem Verhältnis der vor dem Abschalten des Kraftfahrzeugs zuletzt berechneten Lamellentemperatur ($T_{Lam,Stop}$) zu der vor dem Abschalten des Kraftfahrzeugs zuletzt gemessenen Referenztemperatur ($T_{Ref,Stop}$) gesetzt wird, wobei die erste Lamellentemperatur ($T_{Lam,0}$) gleich der aktuellen Referenztemperatur ($T_{Ref,0}$) gesetzt wird, wenn das besagte Verhältnis kleiner oder gleich einem vorbestimmten Wert (x) ist.

**7.** Verfahren nach einem der Ansprüche 1 bis 6,
**dadurch gekennzeichnet,**
**daß** die erste Lamellentemperatur ($T_{Lam,0}$) in Abhängigkeit zu der aktuellen Referenztemperatur ($T_{Ref,0}$) gesetzt wird, wobei die erste Lamellentemperatur ($T_{Lam,0}$) gleich der aktuellen Referenztemperatur ($T_{Ref,0}$) gesetzt wird, wenn das besagte Verhältnis kleiner oder gleich dem vorbestimmten Wert (x) ist.

**8.** Verfahren nach Anspruch 7,
**dadurch gekennzeichnet, daß** die erste Lamellentemperatur ($T_{Lam,0}$) zumindest aus

- der vor dem Abschalten des Kraftfahrzeugs zuletzt gemessenen Referenztemperatur ($T_{Ref,Stop}$),
- der vor dem Abschalten des Kraftfahrzeugs zuletzt berechneten Lamellentemperatur ($T_{Lam,Stop}$) und
- der aktuell gemessenen Referenztemperatur ($T_{Ref,0}$)

berechnet wird.

**9.** Verfahren nach Anspruch 7,
**dadurch gekennzeichnet, daß** sich die für den ersten Zeitpunkt zu setzende Lamellentemperatur ($T_{Lam,0}$) nach der Formel

$$T_{Lam,0} := a_0 \cdot \frac{a_1^n - 1}{a_1 - 1} + a_1^n \cdot \left( T_{Lam,Stop} - T_{Ref,Stop} \right) + T_{Ref,0}$$

berechnet wird, wobei

$T_{Lam,Stop}$ die Lamellentemperatur vor n Zeitintervallen,
$T_{Ref,Stop}$ die Referenztemperatur vor n Zeitintervallen,
$T_{Ref,0}$ die aktuelle Referenztemperatur und
$a_0$ und $a_1$ empirische Konstanten sind.

10. Verfahren nach einem der Ansprüche 7 bis 9,
**dadurch gekennzeichnet,**
**daß** die erste Lamellentemperatur ($T_{Lam,0}$) - wenn die Stillstandszeitdauer (to - $t_{Stop}$) kleiner ist als die vorbestimmte Zeitdauer ($\Delta t_{max}$) und wenn das Verhältnis von zuletzt berechneter Lamellentemperatur ($T_{Lam,Stop}$) zu zuletzt gemessener Referenztemperatur ($T_{Ref,Stop}$) größer als der vorbestimmte Wert (x) ist und wenn das Verhältnis von erster berechneter Lamellentemperatur ($T_{Lam,0}$) zu aktuell gemessener Referenztemperatur ($T_{Ref,0}$) größer als der vorbestimmte Wert (x) ist - gleich der für den ersten Zeitpunkt berechneten Lamellentemperatur ($T_{Lam,0}$) gesetzt wird.

11. Verfahren nach einem der Ansprüche 1 bis 10,
**dadurch gekennzeichnet,**
**daß** als Referenztemperatur ($TR_{ef,i}$) die Öltemperatur in der Lamellenkupplung oder die Gehäusetemperatur der Lamellenkupplung oder die Umgebungstemperatur gemessen wird.

12. Verfahren nach einem der Ansprüche 1 bis 11,
**dadurch gekennzeichnet,**
**daß** die Reibleistung ($P_i$) aus der Drehzahldifferenz zwischen einem Eingang und einem Ausgang der Lamellenkupplung sowie dem aufgebrachten Sperrmoment berechnet wird.

13. Verfahren nach Anspruch 12,
**dadurch gekennzeichnet,**
**daß** die Drehzahldifferenz zwischen dem Eingang und dem Ausgang der Lamellenkupplung aus den Drehzahlen der Räder oder der Drehzahl der Achsen des Kraftfahrzeugs berechnet wird.

14. Verfahren nach einem der Ansprüche 1 bis 13,
**dadurch gekennzeichnet,**
**daß** der Eingriff - in Abhängigkeit vom Fahrzustand des Kraftfahrzeugs - derart erfolgt, daß die berechnete Lamellentemperatur ($T_{Lam,i}$) eine oberhalb der ersten Temperatur ($T_1$) liegende zweite Temperatur ($T_2$) nicht übersteigt, wobei die erste Temperatur ($T_1$) die Temperatur ist, bis zu der die Lamellenkupplung als dauerfest angesehen wird, und die höhere zweite Temperatur ($T_2$) die Temperatur angesehen wird, oberhalb derer die Lamellenkupplung zerstört wird, und wobei die Kupplungslamellen im Temperaturbereich zwischen der ersten und der zweiten Temperatur ($T_1$, $T_2$) zeitfest sind.

15. Verfahren nach einem der Ansprüche 1 bis 14,
**dadurch gekennzeichnet,**
**daß** eine im zeitfesten Temperaturbereich der Kupplungslamellen liegende Grenztemperatur ($T_1 < T_{Grenz} < T_2$) bis zu der die Lamellenkupplung betrieben wird, betriebsabhängig dynamisch angepaßt wird.

16. Verfahren nach Anspruch 15,
**dadurch gekennzeichnet,**
**daß** die Zeitdauer, in der die Kupplungslamellen oberhalb der erster Temperatur ($T_1$) betrieben werden, erfaßt wird und daß die Grenztemperatur ($T_{Grenz}$) mit wachsender Dauer des Kupplungsvorganges dynamisch gesenkt wird.

17. Verfahren nach Anspruch 15 oder 16,
**dadurch gekennzeichnet,**
**daß** die zulässige erste Temperatur ($T_1$) und die zulässige zweite Temperatur ($T_2$) unter Berücksichtigung von eventuellen vorangegangenen Überhitzungen oberhalb der Temperatur ($T_1$) regelmäßig neu berechnet und angepaßt werden.

18. Verfahren nach einem der Ansprüche 1 bis 17,
**dadurch gekennzeichnet,**
**daß** die Lamellenkupplung mittels einer elektronischen Regeleinheit zur Regelung der Fahrdynamik des Kraftfahrzeugs gesteuert wird, wobei in kritischen Fahrzuständen ein Eingriff in die Fahrdynamik des Kraftfahrzeugs gegenüber einer Begrenzung der Betriebstemperatur der Lamellenkupplung Vorrang hat.

**Claims**

1. A process of determining the plate temperature of a multi-plate coupling as a function of time, wherein the multi-plate coupling serves to be used in the driveline of a motor vehicle and comprises coupling plates running in a housing in oil, comprising the following process stages:

   determining a first plate temperature ($T_{Lam,0}$) at a starting point in time (i=0);
   measuring a reference temperature ($T_{Ref,i}$) of a medium or component undergoing at least indirectly a heat exchange with the coupling plates, at time intervals between successive points in time (i=0,1,2,...), wherein as reference temperature ($T_{Ref,i}$) the oil temperature of the oil being comprised in the multi-plate coupling for lubrication or cooling purposes, or the housing temperature of the multi-plate coupling, is used;
   determining the friction power ($P_i$) supplied to the multi-plate coupling during the same time intervals (i=0,1,2, ...);
   calculating the following plate temperatures ($T_{Lam,i}$) in the same time intervals (i=1,2,...) for the respective following points in time (i=1,2,...) from

   - the respective preceding plate temperature ($T_{Lam,i-1}$), namely the plate temperature ($T_{Lam,i-1}$ or $T_{Lam,0}$) calculated or fixed at an earlier point in time (i=1),
   - the reference temperature ($T_{Ref,i-1}$) measured at a point in time (i-1) preceding one time interval and the reference temperature ($T_{Ref,i}$) measured at the actual point in time (i), and
   - the friction power ($P_{i-1}$) determined at an earlier point in time (i-1) and the friction power ($P_i$) determined at the actual point in time (i);

   comparing the respective calculated plate temperature ($T_{Lam,i}$) with a permissible first temperature ($T_1$);
   interfering with the driveline in such a way that the supplied friction power ($P_i$) decreases when the calculated plate temperature ($T_{Lam,i}$) exceeds the permissible first temperature ($T_1$).

2. A process according to claim 1,
   **characterised in**
   **that** the plate temperatures ($T_{Lam,i}$) for the respective following points in time (i = 1,2,...) are calculated by approximation according to the following formula:

$$T_{Lam,i} = a_0 + a_1 \cdot \left(T_{Lam,i-1} - T_{Ref,i-1}\right) + a_2 \cdot \left|P_{i-1}\right| + a_3 \cdot \left|P_i\right| + T_{Ref,i}$$

   wherein

   $T_{Lam}$ is the plate temperature,
   $T_{Ref}$ is the reference temperature,
   $|P|$ is the amount of friction power and
   $a_0$ to $a_3$ are empirical constants for fixed time inter- vals of a defined length.

3. A process according to claim 2,
   **characterised in**
   **that** it is possible for different empirical constants ($a_0$ to $a_3$) to be stored for different fixed time intervals between successive points in time (i=0,1,2,...).

4. A process according to claim 3,
   **characterised in**
   **that** the length of the time intervals between two successive points in time (i=0,1,2,...), while simultaneously changing at least one of the used empirical constants ($a_0$ to $a_3$), can be modified during the process.

5. A process according to any of claims 1 to 4,
   **characterised in**
   **that** the first plate temperature ($T_{Lam,0}$) can be set as a function of a stopping time (to - $t_{Stop}$) between the last switching off operation and the renewed switching on operation of the motor vehicle, wherein the first plate temperature ($T_{Lam,0}$) is set so as to be identical to the actual reference temperature ($T_{Ref,0}$) if the stopping time (to - $t_{Stop}$)

is greater than a defined period of time ($\Delta t_{max}$).

6. A process according to any one of claims 1 to 5,
**characterised in**
**that** the first plate temperature ($T_{Lam,0}$) is set as a function of the ratio of the plate temperature ($T_{Lam,Stop}$) last calculated prior to the motor vehicle having been switched off to the reference temperature ($T_{Ref,Stop}$) last measured prior to the vehicle having been switched off, wherein the first plate temperature ($T_{Lam,0}$) is set so as to equal the actual reference temperature ($T_{Ref,0}$) if said ratio is smaller than or equal to a predetermined value (x).

7. A process according to any one of claims 1 to 6,
**characterised in**
**that** the first plate temperature ($T_{Lam,0}$) is set as a function of the actual reference temperature ($T_{Ref,0}$), wherein the first plate temperature ($T_{Lam,0}$) is set so as to equal the actual reference temperature ($T_{Ref,0}$) if said radio is smaller than or equal to the predetermined value (x).

8. A process according to claim 7,
**characterised in**
**that** the first plate temperature ($T_{Lam,0}$) is calculated at least from

- the reference temperature ($T_{Ref,Stop}$) last measured prior to the motor vehicle having been switched off,
- the plate temperature ($T_{Lam,Stop}$) last calculated prior to the vehicle having been switched off, and
- the actually measured reference temperature ($T_{Ref,0}$).

9. A process according to claim 7,
**characterised in**
**that** the plate temperature ($T_{Lam,0}$) to be set for the first period of time is calculated on the basis of the formula

$$T_{Lam,0} := a_0 \cdot \frac{a_1^n - 1}{a_1 - 1} + a_1^n \cdot \left( T_{Lam,Stop} - T_{Ref,Stop} \right) + T_{Ref,0}$$

wherein

$T_{Lam,Stop}$ is the plate temperature prior to n time inter- vals,
$T_{Ref,Stop}$ is the reference temperature prior to n time in- tervals
$T_{Ref,0}$ is the actual reference temperature, and
$a_0$ and $a_1$ are empirical constants.

10. A process according to any one of claims 7 to 9, **characterised in**
**that**, if the stopping time (to - $t_{Stop}$) is smaller than the predetermined period ($\Delta t_{max}$) and if the ratio of the plate temperature ($T_{Lam,Stop}$) calculated last to the reference temperature ($T_{Ref,Stop}$) measured last is greater than the predetermined value (x) and if the ratio of the first calculated plate temperature ($T_{Lam,0}$) to the actually measured reference temperature ($T_{Ref,0}$) is greater than the predetermined value (x), the first plate temperature ($T_{Lam,0}$) is set so as to equal the plate temperature($T_{Lam,0}$) calculated for the first point in time.

11. A process according to any one of claims 1 to 10,
**characterised in**
**that** the reference temperature ($T_{Ref,i}$) is measured in the form of the oil temperature in the multi-plate coupling or the housing temperature of the multi-plate coupling or the environmental temperature.

12. A process according to any one of claims 1 to 11,
**characterised in**
**that** the friction power ($P_i$) is calculated from the speed differential between an input and an output of the multi-plate coupling and from the locking moment applied.

13. A process according to claim 12,
**characterised in**

**that** the speed differential between the input and the output of the multi-plate coupling is calculated from the speeds of the wheels or from the speed of the axles of the motor vehicle.

14. A process according to any one of claims 1 to 13,
    **characterised in**
    **that** the interference - as a function of the driving condition of the motor vehicle - takes place in such a way that the calculated plate temperature ($T_{Lam,i}$) does not exceed a second temperature ($T_2$) which is above the first temperature ($T_1$), wherein the first temperature ($T_1$) is the temperature up to which the multi-plate coupling can be regarded as being fatigue-resistant and wherein the higher second temperature ($T_2$) is regarded as the temperature above which the multi-plate coupling is destroyed, and wherein, within the temperature range between the first and the second temperature ($T_1$, $T_2$), the coupling plates are fatigue-resistant.

15. A process according to any one of claims 1 to 14,
    **characterised in**
    **that** a limit temperature ($T_1 < T_{Grenz} < T_2$) which prevails in the fatigue-resistant temperature range of the coupling plates and up to which the multi-plate coupling is operated is dynamically adapted as a function of operation.

16. A process according to claim 15,
    **characterised in**
    **that** the period during which the coupling plates are operated above the first temperature ($T_1$) is recorded and that the limit temperature ($T_{Grenz}$) is dynamically decreased as the duration of the coupling process increases.

17. A process according to claim 15 or 16,
    **characterised in**
    **that**, taking into account any previous overheating in excess of the temperature ($T_1$), the permissible first temperature ($T_1$) and the permissible second temperature ($T_2$) are regularly calculated anew and adapted.

18. A process according to any one of claims 1 to 17,
    **characterised in**
    **that** the multi-plate coupling is controlled by an electronic control unit for controlling the driving dynamics of the motor vehicle, wherein in critical driving conditions, an interference in the driving dynamics of the motor vehicle is given preference relative to limiting the operating temperature of the multi-plate coupling.

**Revendications**

1. Procédé pour déterminer au cours du temps, la température de disque d'un embrayage à disques multiples, l'embrayage à disques étant destiné à être utilisé dans la ligne de transmission d'entraînement d'un véhicule automobile et comprenant, dans un carter, des disques d'embrayage en mouvement dans de l'huile, le procédé présentant les étapes de procédé suivantes :

   fixer une première température de disque ($T_{Disque,0}$) à un instant de départ (i=0),
   mesure d'une température de référence ($T_{Réf,i}$) d' un milieu ou d'une pièce se trouvant au moins indirectement en échange de chaleur avec les disques d'embrayage, selon des intervalles de temps entres des instants successifs (i = 0, 1, 2, ...), la température de référence ($T_{Réf,i}$) étant la température de l'huile dans l'embrayage à disques multiples, ou la température du carter de l'embrayage à disques multiples,
   détermination de la puissance de friction ($P_i$) amenée à l'embrayage à disques multiples pendant les mêmes intervalles de temps (i = 0, 1, 2, ...),
   calcul des températures de disque suivantes ($T_{Disque,i}$) dans les mêmes intervalles de temps (i = 1, 2, ...) pour les instants respectivement suivants (i = 1, 2, ...) à partir

   - de la température de disque respectivement précédente ($T_{Disque,i-1}$), c'est que de la température de disque ($T_{Disque,i}-1$ ou $T_{Disque,0}$) calculée ou respectivement déterminée à l'instant antérieur (i-1),
   - de la température de référence ($T_{Réf,i-1}$) mesurée à un instant (i-1) antérieur d'une valeur d'un intervalle de temps et de la température de référence ($T_{Réf,i}$) mesurée à l'instant actuel (i), et
   - de la puissance de friction ($P_{i-1}$) déterminée à l'instant antérieur (i-1) et de la puissance de friction ($P_i$) déterminée à l'instant actuel (i) ;

comparaison de la température de disque respective calculée ($T_{Disque,i}$) avec une première température admissible ($T_1$),

intervention dans la ligne de transmission d'entraînement de façon à ce que la puissance de friction ($P_i$) amenée diminue, lorsque la température de disque calculée ($T_{Disque,i}$) dépasse la première température admissible ($T_1$).

2. Procédé selon la revendication 1,
**caractérisé en ce que** le calcul de la température de disque ($T_{Disque,i}$) pour des instants respectivement suivants (i = 1, 2, ...) s'effectue de manière approchée selon la formule

$$T_{Disque,i} = a_0 + a_1 \cdot (T_{Disque,i-1} - T_{Réf,i-1}) + a_2 \cdot |P_{i-1}| + a_3 \cdot |P_i| + T_{Réf,i}$$

dans laquelle

$T_{Disque}$ est la température de disque,
$T_{Réf}$ est la température de référence,
$|P|$ est la valeur absolue de la puissance de friction, et
$a_0$ à $a_3$ sont des constantes empiriques pour des intervalles de temps fixes d'une longueur définie.

3. Procédé selon la revendication 2,
**caractérisé en ce qu'**il est possible de mémoriser différentes constantes empiriques ($a_0$ à $a_3$) pour des intervalles de temps fixes différents entre des instants (i = 0, 1, 2, ...) successifs.

4. Procédé selon la revendication 3,
**caractérisé en ce que** la longueur des intervalles de temps entre deux instants (i = 0, 1, 2, ...) successifs peut être modifiée pendant le procédé en changeant simultanément au moins l'une des constantes empiriques ($a_0$ à $a_3$) utilisées.

5. Procédé selon l'une des revendications 1 à 4,
**caractérisé en ce que** la première température de disque ($T_{Disque,0}$) est fixée en fonction d'une durée d'arrêt (to - $t_{stop}$) entre la dernière mise à l'arrêt et une nouvelle mise en marche du véhicule automobile, la première température de disque ($T_{Disque,0}$) étant fixée égale à la température de référence actuelle ($T_{Réf,0}$) lorsque la durée d'arrêt ($t_0$ - $t_{stop}$) est plus grande qu'une durée définie ($\Delta t_{max}$).

6. Procédé selon l'une des revendications 1 à 5,
**caractérisé en ce que** la première température de disque ($T_{Disque,0}$) est fixée en fonction du rapport de la température de disque ($T_{Disque,stop}$) calculée en dernier lieu avant la mise à l'arrêt du véhicule automobile, à la température de référence ($T_{Ref,stop}$) mesurée en dernier lieu avant la mise à l'arrêt du véhicule automobile, la première température de disque ($T_{Disque,0}$) étant fixée égale à la température de référence actuelle ($T_{Réf,0}$ lorsque ledit rapport est inférieur ou égal à une valeur (x) prédéterminée.

7. Procédé selon l'une des revendications 1 à 6,
**caractérisé en ce que** le première température de disque ($T_{Disque,0}$) est fixée en fonction de la température de référence actuelle ($T_{Réf,0}$) la première température de disque ($T_{Disque,0}$) étant fixée égale à la température de référence actuelle ($T_{Réf,0}$) lorsque ledit rapport est inférieur ou égal à la valeur (x) prédéterminée.

8. Procédé selon la revendication 7,
**caractérisé en ce que** la première température de disque ($T_{Disque,0}$) est calculée au moins à partir

- de la température de référence ($T_{Réf,stop}$) mesurée en dernier lieu avant la mise à l'arrêt du véhicule automobile,
- de la température de disque ($T_{Disque,stop}$) calculée en dernier lieu avant la mise à l'arrêt du véhicule automobile, et
- de la température de référence ($T_{Réf,0}$) mesurée actuellement.

9. Procédé selon la revendication 7,
**caractérisé en ce que** la température de disque ($T_{Disque,0}$) à fixer pour le premier instant, est calculée selon la formule

$$T_{Disque,0} = a_0 \cdot \frac{a_1^n - 1}{a_1 - 1} + a_1^n \cdot (T_{Disque,stop} - T_{Réf,stop}) + T_{Réf,0}$$

dans laquelle

$T_{Disque,stop}$ est la température de disque avant n intervalles de temps,
$T_{Réf,stop}$ est la température de référence avant n intervalles de temps,
$T_{Réf,0}$ est la température de référence actuelle, et
$a_0$ et $a_1$ sont des constantes empiriques.

**10.** Procédé selon l'une des revendications 8 à 9,
**caractérisé en ce que** la première température de disque ($T_{Disque,0}$) est - lorsque la durée d'arrêt ($t_0$ - stop) est inférieure à la durée prédéterminée ($\Delta t_{max}$) et que le rapport de la température de disque ($T_{Disque,stop}$) mesurée en dernier lieu à la température de référence ($T_{Réf,stop}$) mesurée en dernier lieu est plus grand que la valeur prédéterminée (x) et lorsque le rapport de la première température de disque calculée ($T_{Disque,0}$) à la température de référence ($T_{Réf,0}$) actuellement mesurée est supérieur à la valeur prédéterminée (x) - fixée égale à la température de disque ($T_{Disque,0}$) calculée pour le premier instant.

**11.** Procédé selon l'une des revendications 1 à 10,
**caractérisé en ce qu'**en guise de température de référence ($T_{Ref,i}$), on mesure la température de l'huile dans l'embrayage à disques multiples, ou la température du carter de l'embrayage à disques multiples, ou bien encore la température environnante.

**12.** Procédé selon l'une des revendications 1 à 11
**caractérisé en ce que** la puissance de friction ($P_i$) est calculée à partir de la différence de vitesse de rotation entre une entrée et une sortie de l'embrayage à disques multiples, ainsi que du couple de blocage appliqué.

**13.** Procédé selon la revendication 12,
**caractérisé en ce que** la différence de vitesse de rotation entre l'entrée et la sortie de l'embrayage à disques multiples est calculée à partir des vitesses de rotation des roues ou de la vitesse de rotation des essieux du véhicule automobile.

**14.** Procédé selon l'une des revendications 1 à 13,
**caractérisé en ce que** l'intervention - en fonction de l'état de marche du véhicule automobile - se fait de manière à ce que la température de disque calculée ($T_{Disque,i}$) ne dépasse pas une deuxième température ($T_2$) située au-dessus de la première température ($T_1$), la première température ($T_1$) étant la température jusqu'à laquelle l'embrayage à disques multiples est considéré comme étant durablement résistant à la fatigue, et la deuxième température ($T_2$) plus élevée étant considérée comme la température au-dessus de laquelle l'embrayage à disques multiples est endommagé, et les disques d'embrayage étant résistants dans le temps entre la première et la deuxième température ($T_1$, $T_2$).

**15.** Procédé selon l'une des revendications 1 à 14,
**caractérisé en ce que** l'on adapte de manière dynamique en fonction des conditions de fonctionnement, la température limite ($T_1 < T_{limite} < T_2$) située dans la plage de température de résistance dans le temps des disques d'embrayage, jusqu'à laquelle on fait fonctionner l'embrayage à disques multiples.

**16.** Procédé selon la revendication 15,
**caractérisé en ce qu'**on relève la durée pendant laquelle on fait fonctionner les disques d'embrayage au-dessus de la première température ($T_1$), et **en ce que** la température limite ($T_{limite}$) est abaissée de manière dynamique pour une durée croissante de la phase d'embrayage.

**17.** Procédé selon la revendication 15 ou 16,
**caractérisé en ce que** la première température ($T_1$) admissible et la deuxième température ($T_2$) admissible sont, de manière régulière, nouvellement calculées et adaptées en tenant compte d'éventuelles surchauffes antérieures au-dessus de la température ($T_1$).

18. Procédé selon l'une des revendications 1 à 17,
**caractérisé en ce que** l'embrayage à disques multiples est commandé au moyen d'une unité de régulation électronique destinée à réguler le comportement dynamique de marche du véhicule automobile, une intervention dans le comportement dynamique de marche du véhicule automobile ayant, dans des états de marche critiques, priorité par rapport à une limitation de la température de fonctionnement de l'embrayage à disques multiples.

*Fig. 1*

START

1

Größen, die beim Stillsetzen gespeichert werden:

$t_{Stop}$      Uhrzeit
$T_{Lam,Stop}$      Lamellentemperatur
$T_{Ref,Stop}$      Referenztemperatur

Größen, die beim Start gemessen werden:

$t_0$      Zeit beim Start
$T_{Ref,0}$      Referenztemperatur beim Start
$P_{Reib,0}$      Reibleistung

2

JA    $t_0 - t_{Stop} > \Delta t_{max}$

3

JA    $\dfrac{T_{Lam,Stop}}{T_{Ref,Stop}} \leq x$

4

Berechnung von $n$ aus $t_0 - t_{Stop}$:

$$T_{Lam,0} = a_0 \cdot \frac{a_1^n - 1}{a_1 - 1} + a_1^n \cdot \left(T_{Lam,Stop} - T_{Ref,Stop}\right) + T_{Ref,0}$$

5

JA    $\dfrac{T_{Lam,0}}{T_{Ref,0}} \leq x$

6

$T_{Lam} := T_{Ref}$

*Annahme: Reibmittel vollständig abgekühlt*

7

$T_{Lam} := T_{Lam,0}$

8

$i := 0$

9

$i := i + 1$

14

Regelungsstrategie zur Begrenzung der Reibleistung $P_{i+1}$ aufrufen und dabei aktuellen Wert von $T_{Lam,i}$ übergeben

10

Messung
$T_{Ref}, P_{Reib}$

15

Kupplungsfunktion uneingeschränkt freigeben

11

$T_{Ref,i} := T_{Ref}$
$P_i := P_{Reib}$

12

$$T_{Lam,i} = a_0 + a_1 \cdot \left(T_{Lam,i-1} - T_{Ref,i-1}\right) + a_2 \cdot |P_{i-1}| + a_3 \cdot |P_i| + T_{Ref,i}$$

13

JA    $T_{Lam,i} > T_1$

EP 1 692 477 B2

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19902388 C2
- US 5337866 A
- US 6152275 A
- GB 2245367 A